# EUROPÄISCHE PATENTANMELDUNG

(11) **EP 3 904 697 A1**
(43) Veröffentlichungstag der Anmeldung: **03.11.2021**
(21) Anmeldenummer: 20172097.6
(22) Anmeldetag: 29.04.2020
(51) Int. Cl.: F04D 29/66, F02M 35/12, F02C 6/12, F02C 7/045

(54) **SCHALLDÄMPFER FÜR EINEN ABGASTURBOLADER EINER BRENNKRAFTMASCHINE**

(71) Anmelder: ABB Schweiz AG, 5400 Baden (CH)
(72) Erfinder: Mathey, Christoph, 5442 Fislisbach (CH); Spinder, Carsten, 79618 Rheinfelden (DE); Albiez, Bernd, 79736 Rickenbach (DE); Behrendt, Detlef, 79790 Rheinheim (DE)
(74) Vertreter: Zimmermann & Partner Patentanwälte mbB

(57) **Zusammenfassung**

Die Erfindung betrifft einen Schalldämpfer (40) für einen Abgasturbolader. Der Schalldämpfer umfasst eine Vielzahl von Dämpfungselementen (41), die konzentrisch um eine Zentralachse (42) des Schalldämpfers angeordnet und konzentrisch voneinander beabstandet sind, so dass jeweils zwischen benachbarten Dämpfungselementen ein Strömungskanal (43) ausgebildet ist. Der Strömungskanal (43) weist eine Einströmöffnung (44) auf, die von der Zentralachse (42) einen größeren radialen Abstand aufweist als eine Ausströmöffnung (45) des Strömungskanals (43).

## Beschreibung

### TECHNISCHES GEBIET

Die Erfindung bezieht sich auf das Gebiet der Abgasturbolader für aufgeladene Brennkraftmaschinen. Insbesondere betrifft die Erfindung einen Schalldämpfer für einen Abgasturbolader einer Brennkraftmaschine. Ferner betrifft die Erfindung einen Abgasturbolader mit einem in der vorliegenden Offenbarung beschriebenen Schalldämpfer sowie eine Brennkraftmaschine mit einem solchen Abgasturbolader.

### TECHNISCHER HINTERGRUND

Für die Leistungssteigerung einer Brennkraftmaschine werden heutzutage standardmäßig Abgasturbolader eingesetzt. Ein Abgasturbolader umfasst typischerweise eine Turbine im Abgastrakt der Verbrennungskraftmaschine und einen der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Im Betrieb des Abgasturboladers entstehen typischerweise vorwiegend im Verdichterrad Schallwellen unerwünscht hoher Amplitude, die durch den Luftansaugkanal an die Umgebung freigesetzt werden. Diese Schallwellen werden daher üblicherweise mittels eines Schalldämpfers, insbesondere eines Filterschalldämpfers, gedämpft.

Aus dem Stand der Technik sind Filterschalldämpfer bekannt, die typischerweise auf der Ansaugseite eines Verdichters eingesetzt werden, der die Verbrennungsluft komprimiert und einem Verbrennungsmotor zuführt. Angetrieben wird ein derartiger Verdichter von der Abgasturbine eines Abgasturboladers.

Üblicherweise sind die Filterschalldämpfer derart ausgebildet, dass Umgebungsluft durch einen am Umfang eines Filterschalldämpfers angeordneten Filter in einen mit Dämpfungselementen ausgestatteten Innenraum des Filterschalldämpfers eingeleitet werden kann, anschließend an den Dämpfungselementen vorbei strömt, und dabei zum Verdichterrad, von dem entgegen der Luftströmung Schallwellen ausgehen, durch Leitelemente umgelenkt wird. Die Schalldämpfung erfolgt an den Dämpfungselementen dissipativ, indem die Schallenergie unmittelbar durch poröse oder faserige Absorbermaterialien, aus denen die Dämpfungselemente im Wesentlichen aufgebaut sind, in Wärme umgesetzt wird. Die Absorbermaterialien werden üblicherweise durch eine akustisch transparente Hülle in Form gehalten und vor der Strömung geschützt. Diese Hülle kann ganz oder teileweise aus metallischen Werkstoffen bestehen.

Es hat sich herausgestellt, dass mit den aus dem Stand der Technik bekannten Filterschalldämpfern, bei denen die Ansaugluft durch eine Ringfläche radial angesaugt, sowie durch gekrümmte Einschübe radial geleitet und anschließend axial zum Austritt des Schalldämpfers umgelenkt wird, noch keine optimale Schalldämpfung erzielt wird, und unerwünschte Strömungs- und Druckverluste auftreten.

Ferner hat sich herausgestellt, dass bei konventionellen Filterschalldämpfern unerwünschte Strömungs- und Druckverluste auftreten.

### KURZE DARSTELLUNG DER ERFINDUNG

Die Aufgabe der vorliegenden Erfindung besteht darin, einen Schalldämpfer bereitzustellen, der mindestens hinsichtlich einem der obengenannten Nachteile der aus dem Stand der Technik bekannten Filterschalldämpfer verbessert ist. Insbesondere besteht eine Aufgabe der vorliegenden Erfindung darin, einen Schalldämpfer für einen Abgasturbolader bereitzustellen, der im Vergleich zu den aus dem Stand der Technik bekannten Filterschalldämpfer ein verbessertes Design aufweist, insbesondere zur Minimierung von Strömungs- und Druckverlusten.

Zur Lösung der obengenannten Aufgabe wird ein Schalldämpfer für einen Abgasturbolader gemäß dem unabhängigen Anspruch bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird ein Schalldämpfer für einen Abgasturbolader bereitgestellt, welcher eine Vielzahl von Dämpfungselementen umfasst, die konzentrisch um eine Zentralachse des Schalldämpfers angeordnet und konzentrisch voneinander beabstandet sind, so dass jeweils zwischen benachbarten Dämpfungselementen ein Strömungskanal ausgebildet ist. Die Dämpfungselemente umfassen ein nicht-metallisches Material. Insbesondere, umfassen die Dämpfungselemente ein oder mehrere Absorbermaterialien aus einem nicht-metallisches Material. Ferner können die Dämpfungselemente eine Hülle aus einem nicht-metallischen Material umfassen. Der Strömungskanal weist eine Einströmöffnung auf, die von der Zentralachse einen größeren radialen Abstand aufweist als eine Ausströmöffnung des Strömungskanals.

Somit wird vorteilhafterweise ein Schalldämpfer für einen Abgasturbolader bereitgestellt, der gegenüber den aus dem Stand der Technik bekannten Schalldämpfern verbessert ist. Insbesondere wird durch den erfindungsgemäßen Schalldämpfer ein Schalldämpfer bereitgestellt, mit welchem Strömungs- und Druckverluste verringert werden können. Somit kann ein Schalldämpfer mit verbesserten Dämpfungseigenschaften bereitgestellt werden.

Gemäß einem weiteren Aspekt der Erfindung wird ein Abgasturbolader mit einem Schalldämpfer gemäß einer der hierin beschriebenen Ausführungsformen bereitgestellt, wobei der Schalldämpfer auf der Ansaugseite eines Verdichters, insbesondere eines Radialverdichters, des Abgasturboladers angeordnet ist. Insbesondere ist der hierein beschriebene Schalldämpfer vorteilhafterweise derart ausgestaltet, dass der Schalldämpfer mit einem radial innen liegenden Gehäusebereich eines Verdichtergehäuses verbunden werden kann, wobei der Schalldämpfer im montierten Zustand zumindest teilweise von einem radial außen liegenden Gehäusebereich des Verdichtergehäuses umschlossen ist.

Gemäß einem weiteren Aspekt der Erfindung wird eine Brennkraftmaschine mit einem hierin beschriebenen Abgasturbolader bereitgestellt. Der Abgasturbolader umfasst einen Schalldämpfer gemäß hierin beschriebenen Ausführungsformen, der auf der Ansaugseite eines Verdichters, insbesondere Radialverdichters, des Abgasturboladers angeordnet ist. Der Abgasturbolader ist vorteilhafter derart ausgestaltet, dass der Abgasturbolader über eine oder mehrere Abgasleitungen und eine oder mehrere Ladeluftaustrittsöffnungen in vertikaler oder horizontaler Ausrichtung an einen Verbrennungsmotor angeschlossen werden kann.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Figur 1: eine schematische Schnittansicht eines Schalldämpfers gemäß hierin beschriebenen Ausführungsformen, der auf einer Ansaugseite eines Verdichters angeordnet ist;
- Figur 2: eine schematische axiale Frontansicht eines Schalldämpfers gemäß hierin beschriebenen Ausführungsformen; und
- Figur 3: eine schematische perspektivische Ansicht eines Abgasturboladers mit einem Schalldämpfer gemäß hierin beschriebenen Ausführungsformen.

### DETAILLIERTE BESCHREIBUNG DER FIGUREN

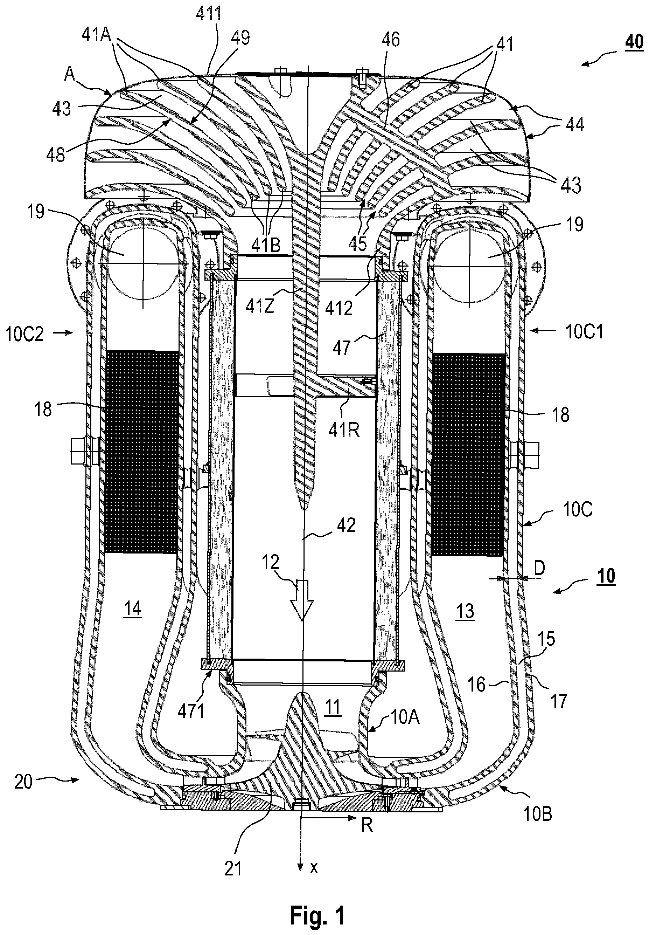

Mit Bezugnahme auf Figur 1 wird ein Schalldämpfer 40 für einen Abgasturbolader gemäß der vorliegenden Offenbarung beschrieben. Figur 1 zeigt eine schematische Schnittansicht des Schalldämpfers 40, der auf einer Ansaugseite eines Verdichters, insbesondere eins Radialverdichters 20, angeordnet ist.

Gemäß einer Ausführungsform, die mit anderen hierin beschriebenen Ausführungsformen kombiniert werden kann, umfasst der Schalldämpfer 40 eine Vielzahl von Dämpfungselementen 41. Wie beispielhaft in Figur 1 dargestellt ist, sind die Dämpfungselemente 41 konzentrisch um eine Zentralachse 42 des Schalldämpfers angeordnet. Ferner sind die Dämpfungselemente 41 konzentrisch voneinander beabstandet. Mit anderen Worten, die Dämpfungselemente 41 sind in radialer Richtung R zueinander beabstandet angeordnet. Wie in Figur 1 beispielhaft dargestellt ist sind die Dämpfungselemente 41 derart ausgebildet und angeordnet, dass jeweils zwischen benachbarten Dämpfungselementen 41 jeweils ein Strömungskanal 43 ausgebildet ist. Der Strömungskanal 43 weist eine Einströmöffnung 44 auf, die von der Zentralachse 42 einen größeren radialen Abstand aufweist als eine Ausströmöffnung 45 des Strömungskanals 43. Die Dämpfungselemente 41 umfassen ein nicht-metallisches Material. Insbesondere, können die Dämpfungselemente 41 aus einem nicht-metallischen Material bestehen.

Demnach wird vorteilhafterweise ein Schalldämpfer für einen Abgasturbolader bereitgestellt, der gegenüber den aus dem Stand der Technik bekannten Schalldämpfern verbessert ist. Insbesondere können mit den hierein beschriebenen Ausführungsformen des Schalldämpfers Strömungs- und Druckverluste verringert werden. Ferner kann durch die Verwendung eines nicht-metallisches Materials ein kostengünstiger Schalldämpfer bereitgestellt werden. Die Verwendung eines nicht-metallisches Materials kann zudem zu einer verbesserten Schalldämpfung führen. Darüber hinaus kann die Bauform des Schalldämpfers besser an die Bedürfnisse der Anwendung angepasst werden. Insbesondere kann der Schalldämpfer kleiner gebaut werden, wodurch dieser kostengünstiger wird.

Gemäß einer Ausführungsform, die mit anderen hierin beschriebenen Ausführungsformen kombiniert werden kann, umfasst das nicht-metallische Material mindestens ein Material ausgewählt aus der Gruppe bestehend aus: Polymeren, insbesondere anorganischen Polymeren; polymerbasierten Werkstoffen, insbesondere polymerbasierten Verbundwerkstoffen; keramischen Materialien, insbesondere Materialien umfassend keramische Hohlkugeln; Glasfasermaterialen, insbesondere Absorbermaterialen auf Glasfaserbasis; Glasfasermaterialen umfassend SiO₂ Silikatfasern; und Glasschaummaterialien. Somit können die Dämpfungselemente 41 aus einem oder mehreren der hierin aufgelisteten nicht-metallischen Materialien bestehen, oder ein oder mehrere der hierin aufgelisteten nicht-metallischen Materialien umfassen.

Wie aus Figur 1 hervorgeht, unterscheidet sich die Anordnung der Strömungskanäle des hierin beschriebenen Schalldämpfers von der Strömungskanalanordnung konventioneller Schalldämpfern darin, dass die Strömungskanäle des hierin beschrieben Schalldämpfers konzentrisch ausgeführt sind. Im Gegensatz dazu sind konventionelle Schalldämpfer für Abgasturbolader typischerweise derart ausgestaltet, dass die Dämpfungselemente in Umfangsrichtung um eine zentrale Achse herum angeordnet sind, wobei zwischen den Dämpfungselementen Strömungskanäle ausgebildet sind, so dass deren Ausströmöffnungen im Wesentlichen senkrecht auf die zentrale Achse gerichtet sind. Wie in Figur 1 gargestellt ist, sind die Strömungskanäle des hierin beschriebenen Schalldämpfers derart ausgestaltet, dass deren Ausströmöffnungen eine Ausströmrichtung bereitstellen, welche eine radiale und eine positive axiale Strömungskomponente aufweist.

Gemäß einer Ausführungsform, die mit anderen hierin beschriebenen Ausführungsformen kombiniert werden kann, sind die Dämpfungselemente 41 trichterartig um die Zentralachse 42 herum angeordnet, wie es beispielhaft in Figur 1 dargestellt ist. Ein "trichterartiges Dämpfungselement" kann in der vorliegenden Offenbarung so verstanden werden, dass das Dämpfungselement eine Form eines Kegelstumpfes aufweist, wobei der Kegelstumpf eine zentrale Öffnung aufweist, die sich von der Kegelstumpfgrundfläche zur Kegelstumpfdeckfläche erstreckt und dabei verjüngt. Die Kegelstumpfmantelfläche kann gekrümmt sein. Die in Figur 1 dargestellten radial nach außen zeigenden Strömungsflächen 48 Dämpfungselement sind beispielsweise, konkave gekrümmte Mantelflächen.

Gemäß einer Ausführungsform, die mit anderen hierin beschriebenen Ausführungsformen kombiniert werden kann, sind die Dämpfungselementen 41 zwischen einem einströmseitigen Ende 41A und einem ausströmseitigen Ende 41B gekrümmt, sodass der Strömungskanal 43 derart ausgebildet ist, um eine Strömungsumlenkung in Richtung der Zentralachse 42 bereitzustellen. Wie beispielhaft in Figur 1 gezeigt ist, weisen radial nach außen zeigende Strömungsflächen 48 der Dämpfungselemente 41 typischerweise eine konkave Krümmung auf. Radial nach innen zeigende Strömungsflächen 49 der Dämpfungselementen 41 weisen typischerweise eine konvexe Krümmung auf.

Insbesondere kann die von den Strömungskanälen bereitgestellte Strömungsumlenkung eine Umlenkung der Strömung um einen Umlenkwinkel α von 5° ≤ α ≤ 180 °, insbesondere 15° ≤ α ≤ 180°, umfassen. Unter dem Ausdruck "Umlenkwinkel" kann in der vorliegenden Offenbarung der Winkel verstanden werden, welcher sich zwischen eine Haupteinströmrichtung einer Einströmöffnung 44 eines Strömungskanals 43 und einer Hauptausströmrichtung einer Ausströmöffnung 45 des Strömungskanals 43 ergibt.

Wie in Figur 1 beispielhaft dargestellt ist, können die jeweiligen Umlenkwinkel der jeweiligen Strömungskanale in radialer Richtung R zunehmen. Mit anderen Worten, radial weiter außen angeordnete Strömungskanäle stellen typischerweise einen größeren Umlenkwinkel bereit als radial weiter innen angeordnete Strömungskanäle.

Gemäß einer Ausführungsform, die mit anderen hierin beschriebenen Ausführungsformen kombiniert werden kann, sind die Strömungskanäle (auch als Kulissenkanäle bezeichnet) derart konfiguriert, dass die Durchströmungsgeschwindigkeit möglichst konstant ist und keine Geschwindigkeitsspitzen auftreten. Dies ist insbesondere von Vorteil da Geschwindigkeitsspitzen quadratisch in den Druckverlust eingehen, sodass der hierin beschriebene Schalldämpfer einen verringerten Druckverlust aufweist. Eine Verringerung des Druckverlusts wirkt sich vorteilhafterweise positiv auf das Dämpfungsverhalten des Schalldämpfers aus, so dass das Dämpfungsverhalten des hierin beschriebenen Schalldämpfers verbessert werden kann.

Gemäß einer Ausführungsform, die mit anderen hierin beschriebenen Ausführungsformen kombiniert werden kann, liegen einströmseitige Enden 41A der Dämpfungselemente 41 auf einer in axialer Richtung x konvex gekrümmten Fläche A. Beispielsweise kann die konvex gekrümmten Fläche A eine teilweise kugelförmige oder teilweise elliptischen Fläche sein. Typischerweise ist auf der konvex gekrümmten Fläche A ein Lochblech 411 oder ein Filterelement angeordnet, wie es beispielhaft in Figur 1 dargestellt ist.

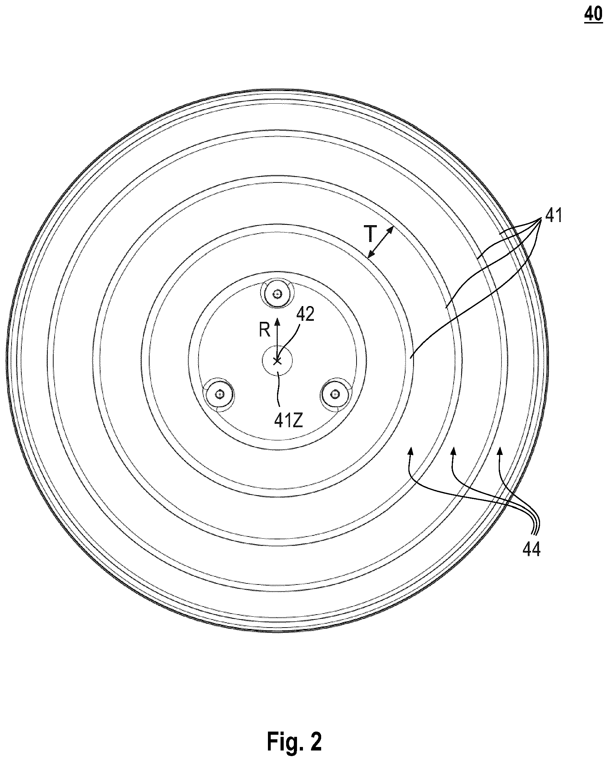

Gemäß einer Ausführungsform, die mit anderen hierin beschriebenen Ausführungsformen kombiniert werden kann, weist die Einströmöffnung 44 der jeweiligen Strömungskanäle einen größeren Strömungsquerschnitt auf als die Ausströmöffnung 45 der jeweiligen Strömungskanäle. Wie beispielhaft in Figur 2 dargestellt ist, kann die Einströmöffnung 44 der jeweiligen Strömungskanäle 43 ringartig um die Zentralachse 42 ausgebildet sein. Ferner ist in Figur 2 beispielhaft ein Abstand T zwischen benachbarten Dämpfungselementen 41 dargestellt. Der Abstand T zwischen benachbarten Dämpfungselementen 41 kann in radialer Richtung R zunehmen, abnehmen oder konstant sein.

In diesem Zusammenhang sei angemerkt, dass auch die Ausströmöffnung 45 der jeweiligen Strömungskanäle 43 ringartig um die Zentralachse 42 ausgebildet sein kann.

Gemäß einer Ausführungsform, die mit anderen hierin beschriebenen Ausführungsformen kombiniert werden kann, umfasst der Schalldämpfer ferner eine Verbindungsstruktur 46 zur Verbindung von mindestens zwei benachbarten Dämpfungselementen 41. Typischerweise ist Verbindungsstruktur 46 ausgelegt, um die Stabilität des Schalldämpfers zu verbessern. Die Verbindungsstruktur 46 kann beispielsweise durch Stege zwischen den Dämpfungselementen bereitgestellt werden. Die Verbindungsstruktur kann ein nicht-metallisches Material umfassen oder aus einem nicht-metallischen Material bestehen. Beispielsweise kann die Verbindungsstruktur 46 mindestens ein nicht-metallisches Material ausgewählt aus der Gruppe bestehend aus: Polymeren, insbesondere anorganischen Polymeren; polymerbasierten Werkstoffen, insbesondere polymerbasierten Verbundwerkstoffen; keramischen Materialien, insbesondere Materialien umfassend keramische Hohlkugeln; Glasfasermaterialen, insbesondere Absorbermaterialen auf Glasfaserbasis; Glasfasermaterialen umfassend SiO₂ Silikatfasern; und Glasschaummaterialien, umfassen oder daraus bestehen. Somit kann die Verbindungsstruktur 46 aus einem oder mehreren der hierin aufgelisteten nicht-metallischen Materialien bestehen, oder ein oder mehrere der hierin aufgelisteten nicht-metallischen Materialien umfassen.

Gemäß einer Ausführungsform, die mit anderen hierin beschriebenen Ausführungsformen kombiniert werden kann, umfasst der Schalldämpfer ferner eine ausströmseitge zylindrische Dämpfungsstruktur 47. Beispielsweise kann die zylindrische Dämpfungsstruktur 47 mit einem ausströmseitgen Ende des radial äußersten Dämpfungselements 412 verbunden sein. Somit können die Dämpfungseigenschaften des Schalldämpfers zusätzlich verbessert werden.

Gemäß einer Ausführungsform, die mit anderen hierin beschriebenen Ausführungsformen kombiniert werden kann umfasst die Dämpfungsstruktur 47 ein nicht-metallisches Material oder besteht aus einem nicht-metallischen Material. Beispielsweise kann die Dämpfungsstruktur 47 mindestens ein nicht-metallisches Material ausgewählt aus der Gruppe bestehend aus: Polymeren, insbesondere anorganischen Polymeren; polymerbasierten Werkstoffen, insbesondere polymerbasierten Verbundwerkstoffen; keramischen Materialien, insbesondere Materialien umfassend keramische Hohlkugeln; Glasfasermaterialen, insbesondere Absorbermaterialen auf Glasfaserbasis; Glasfasermaterialen umfassend SiO₂ Silikatfasern; und Glasschaummaterialien, umfassten oder daraus bestehen. Somit kann die Dämpfungsstruktur 47 aus einem oder mehreren der hierin aufgelisteten nicht-metallischen Materialien bestehen, oder ein oder mehrere der hierin aufgelisteten nicht-metallischen Materialien umfassen.

Gemäß einer Ausführungsform, die mit anderen hierin beschriebenen Ausführungsformen kombiniert werden kann, kann die zylindrische Dämpfungsstruktur 47 eine Verbindungsstruktur 471, zur Verbindung des Schalldämpfers mit einer Ansaugseite eines Verdichtergehäuses 10 eines Abgasturboladers 30 aufweisen. Wie in Figur 1 gezeigt ist, kann das Verdichtergehäuse 10 beispielsweise ein Verdichtergehäuse eines Radialverdichters 20 sein. Die Verbindungsstruktur 471 kann als Verbindungsflansch ausgeführt sein.

Gemäß einer Ausführungsform, die mit anderen hierin beschriebenen Ausführungsformen kombiniert werden kann umfasst die Verbindungsstruktur 471 ein nicht-metallisches Material oder besteht aus einem nicht-metallischen Material. Beispielsweise kann die Verbindungsstruktur 471 mindestens ein nicht-metallisches Material ausgewählt aus der Gruppe bestehend aus: Polymeren, insbesondere anorganischen Polymeren; polymerbasierten Werkstoffen, insbesondere polymerbasierten Verbundwerkstoffen; keramischen Materialien, insbesondere Materialien umfassend keramische Hohlkugeln; Glasfasermaterialen, insbesondere Absorbermaterialen auf Glasfaserbasis; Glasfasermaterialen umfassend SiO₂ Silikatfasern; und Glasschaummaterialien, umfassen oder daraus bestehen. Somit kann die Verbindungsstruktur 471 aus einem oder mehreren der hierin aufgelisteten nicht-metallischen Materialien bestehen, oder ein oder mehrere der hierin aufgelisteten nicht-metallischen Materialien umfassen.

Mit Bezugnahme auf Figur 1 wird ein Verdichtergehäuse 10 eines Radialverdichters 20 gemäß der vorliegenden Offenbarung näher beschrieben. Gemäß einer Ausführungsform, die mit anderen hierin beschriebenen Ausführungsformen kombiniert werden kann, umfasst das Verdichtergehäuse 10 einen radial innen liegenden Gehäusebereich 10A, der einen axialen Einströmungskanal 11 in einem Ansaugbereich des Radialverdichters 20 bildet. Ferner umfasst das Verdichtergehäuse 10 einen sich an den radial innen liegenden Gehäusebereich 10A anschließenden Diffusorbereich 10B. Der Diffusorbereich 10B ist ausgebildet, um eine radiale Strömung nach einem Verdichterrad 21 in eine axiale Richtung entgegen einer Einströmungsrichtung 12 des Einströmkanals 11 umzulenken. Ferner umfasst das Verdichtergehäuse 10 einen sich an den Diffusorbereich 10B anschließenden radial außen liegenden Gehäusebereich 10C, der sich axial entgegengesetzt zur Einströmungsrichtung 12 erstreckt und einen oder mehrere Ladeluftsammelräume 13, 14 bereitstellt. Einzelne Teile des Verdichtergehäuses, insbesondere der Diffusorbereich 10B des Verdichtergehäuses, können mit den hierein beschriebenen nicht-metallischen Materialien schallabsorbierend ausgekleidet sein.

Wie beispielhaft in Figur 1 dargestellt ist, umfasst der eine oder die mehreren Ladeluftsammelräume 13, 14 typischerweise jeweils eine Ladeluftaustrittsöffnung 19. Die Ladeluftaustrittsöffnung ist typischerweise derart ausgebildet, um eine Ausströmung der Ladeluft in eine Ausströmungsrichtung 23 bereitzustellen die quer, insbesondere im Wesentlichen rechtwinklig, zur Einströmungsrichtung 12 ist.

In der in Figur 1 dargestellten beispielhaften Ausführungsform umfasst der radial außen liegende Gehäusebereich 10C einen ersten Ladeluftsammelraum 13 und einen zweiten Ladeluftsammelraum 14. Der erste Ladeluftsammelraum 13 und der zweite Ladeluftsammelraum 14 sind jeweils mit dem Diffusorbereich 10B verbunden, sodass ein erster Ladeluftgehäuseschenkel 10C1 und ein zweiter Ladeluftgehäuseschenkel 10C2 bereitgestellt wird.

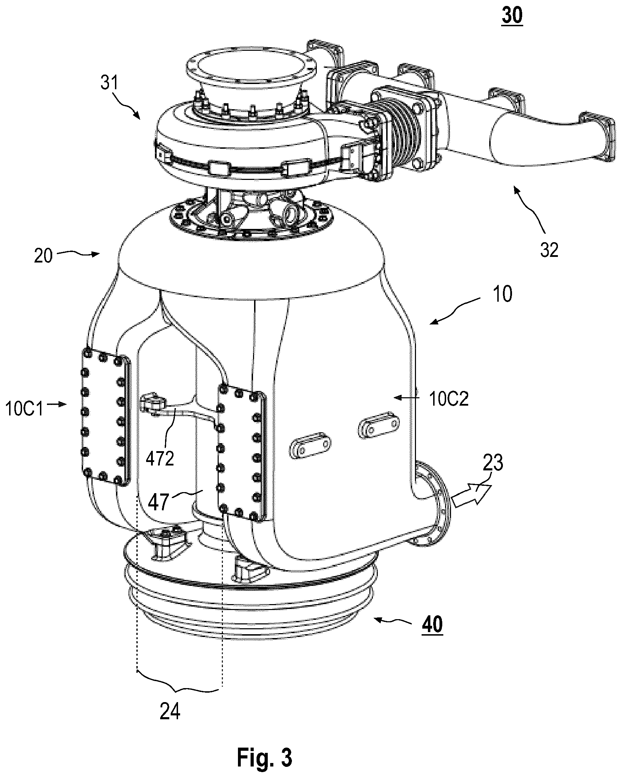

Typischerweise weist der radial außen liegenden Gehäusebereich 10C eine axiale Ausdehnung in entgegengesetzter Richtung zur Einströmungsrichtung 12 auf, die größer ist als eine axiale Ausdehnung des radial innen liegenden Gehäusebereichs 10A. Somit ist das Verdichtergehäuse derart ausgebildet, dass der radial außen liegende Gehäusebereich 10C einen axialen Zwischenraum 24 zumindest teilweise umschließt. Der axiale Zwischenraum 24, der typsicherweise zwischen dem ersten Ladeluftgehäuseschenkel 10C1 und dem zweiten Ladeluftgehäuseschenkel 10C2 liegt, ist in Figur 3 gezeigt. Typischerweise, ist der axiale Zwischenraum 24 ausgebildet, um ansaugseitig eine zylindrische Dämpfungsstruktur 47 eines hierin beschriebenen Schalldämpfers aufzunehmen. Wie es beispielhaft in Figur 1 dargestellt ist, kann die zylindrische Dämpfungsstruktur 47 über ein Befestigungselement 472 an dem radial außen liegenden Gehäusebereich 10C befestigt sein.

Mit anderen Worten, der axiale Zwischenraum 24 kann zur Luftzufuhr zum Einströmkanal 11 des Radialverdichters genutzt werden. Die Luftzufuhr kann über eine Zuleitung erfolgen, die beispielsweise als zylindrische Dämpfungsstruktur 47, ausgebildet sein kann. Eine derartige schallabsorbierende Ansaugstrecke kann vorteilhafterweise genutzt werden, um an der Ansaugöffnung des Radialverdichters eine Reduktion des Schalldruckpegels zu erreichen. Damit kann ein Schalldämpfer mit geringerer Schallabsorption verwendet werden, der wiederum Vorteile im Druckverlust hat. Dies führt somit zu einer weiteren Verringerung der Verluste und kann somit zu einer Wirkungsgradverbesserung eines Radialverdichters beitragen.

Gemäß einer Ausführungsform, die mit anderen hierin beschriebenen Ausführungsformen kombiniert werden kann, ist zumindest einer des radial außen liegenden Gehäusebereichs 10C und des Diffusorbereichs 10B zweischalig ausgeführt ist, so dass ein für ein Kühlmedium durchströmbarer Zwischenraum 15 bereitgestellt wird. Insbesondere ist typischerweise der radial außen liegenden Gehäusebereichs 10C zweischalig ausgeführt und der Diffusorbereich 10B zumindest teilweise oder vollständig zweischalig ausgeführt. Beispielsweise kann zumindest einer, insbesondere beide, des radial außen liegenden Gehäusebereichs 10C und des Diffusorbereichs 10B, eine Innenschale 16 und eine zur Innenschale mit einem Abstand D beabstandete Außenschale 17 umfassen, wie es beispielhaft in Figur 1 dargestellt ist.

Somit kann vorteilhafter weise ein Verdichtergehäuse mit integrierter Ladluftkühlung bereitgestellt werden.

Ferner kann, in dem einen oder den mehreren Ladeluftsammelräumen 13, 14 mindestens ein Ladeluftkühler 18 bereitgestellt sein, wie es beispielhaft in Figur 1 dargestellt ist.

Gemäß einer Ausführungsform, die mit anderen hierin beschriebenen Ausführungsformen kombiniert werden kann, kann der Schalldämpfer 40 ferner ein zentrales längliches Dämpfungselement 41Z umfassen. Typischerweise erstreckt sich das zentrale längliche Dämpfungselement 41Z entlang der Zentralachse und ragt in axialer Richtung x über ein ausströmseitiges Ende des radial äußersten Dämpfungselements 412 hinaus. Insbesondere kann das zentrale längliche Dämpfungselement 41Z ein dornartiges Dämpfungselement sein, wie es beispielhaft in Figur 1 dargestellt ist. Typischerweise ist das zentrale längliche Dämpfungselement 41Z konzentrisch um die Zentralachse 42 des Schalldämpfers angeordnet. Somit können die Dämpfungseigenschaften des Schalldämpfers zusätzlich verbessert werden.

Wie beispielhaft in Figur 1 gezeigt ist, kann ferner eine Lagerungsstruktur 41R zur Lagerung des zentralen länglichen Dämpfungselements 41Z vorgesehen sein. Beispielsweise kann die Lagerungsstruktur 41R radiale Stege umfassen. Typischerweise sind die radiale Stegen an einem Ende mit der inneren Mantelfläche der zylindrischen Dämpfungsstruktur und an einem gegenüberliegenden Ende mit dem zentralen länglichen Dämpfungselements 41Z verbunden. Gemäß einem Beispiel können die radialen Stege tropfenförmige Querschnitte aufweisen.

Mit Bezugnahme auf Figur 3 wird ein Abgasturbolader 30 mit einem Schalldämpfer 40 gemäß der vorliegenden Offenbarung beschrieben. Gemäß einer Ausführungsform, die mit anderen hierin beschriebenen Ausführungsformen kombiniert werden kann, umfasst der Abgasturbolader 30 einen Schalldämpfer 40 gemäß hierein beschriebenen Ausführungsformen, wobei der Schalldämpfer 40 auf der Ansaugseite eines Verdichters, insbesondere Radialverdichters 20, des Abgasturboladers angeordnet ist. Wie es beispielshaft aus Figur 3 in Kombination mit Figur 1 hervorgeht, kann der Schalldämpfer 40 mit einem radial innen liegenden Gehäusebereich 10A eines Verdichtergehäuses 10 verbunden und zumindest teilweise von einem radial außen liegenden Gehäusebereich 10C des Verdichtergehäuses 10 umschlossen sein.

Typischerweise wird der Abgasturbolader 30 gemäß hierin beschriebenen Ausführungsformen über eine oder mehrere Abgasleitungen 32 und eine oder mehrere Ladeluftaustrittsöffnungen 19 in vertikaler oder horizontaler Ausrichtung an einen Verbrennungsmotor angeschlossen. Somit kann vorteilhafterweise eine Brennkraftmaschine mit einem hierin beschriebenen Abgasturbolader bereitgestellt werden, der über eine oder mehrere Abgasleitungen und eine oder mehrere Ladeluftaustrittsöffnungen in vertikaler oder horizontaler Ausrichtung an einen Verbrennungsmotor angeschlossen werden kann.

Wie aus den hierin beschriebenen Ausführungsformen hervorgeht wird vorteilhafterweise ein Schalldämpfer bereitgestellt, der gegenüber den aus dem Stand der Technik bekannten Filterschalldämpfern verbessert ist.

Insbesondere wird durch den erfindungsgemäßen Schalldämpfer ein Schalldämpfer bereitgestellt, mit welchem Strömungs- und Druckverluste verringert werden können. Insbesondere, weist der erfindungsgemäße Schalldämpfer vorteilhafterweise ein Design und eine Anordnung der Dämpfungselemente auf, mit welchem Druckverluste bei Durchströmung des Schalldämpfers verringert werden können, was zu verbesserten Dämpfungseigenschaften führt.

### BEZUGZEICHENLISTE

- 10: Verdichtergehäuse
- 10A: radial innen liegender Gehäusebereich
- 10B: Diffusorbereich
- 10C: radial außen liegender Gehäusebereich
- 10C1: erster Ladeluftgehäuseschenkel
- 10C2: zweiter Ladeluftgehäuseschenkel
- 11: Einströmungskanal
- 12: Einströmungsrichtung
- 13: erster Ladeluftsammelraum
- 14: zweiter Ladeluftsammelraum
- 15: Zwischenraum
- 16: Innenschale
- 17: Außenschale
- 18: Ladeluftkühler
- 19: Ladeluftaustrittsöffnung
- 20: Radialverdichter
- 21: Verdichterrad
- 23: Ausströmungsrichtung der Ladeluft
- 24: axialer Zwischenraum
- 30: Abgasturbolader
- 40: Schalldämpfer
- 41: Dämpfungselemente
- 41A: einströmseitigen Ende der Dämpfungselemente
- 41B: ausströmseitiges Ende der Dämpfungselemente
- 41Z: zentrales längliches Dämpfungselement
- 41R: Lagerungsstruktur zur Lagerung des zentralen länglichen Dämpfungselements
- 411: Lochblech/ Filterelement
- 412: radial äußerstes Dämpfungselement
- 42: Zentralachse
- 43: Strömungskanal
- 44: Einströmöffnung
- 45: Ausströmöffnung
- 46: Verbindungsstruktur
- 47: zylindrische Dämpfungsstruktur
- 471: Verbindungsstruktur
- 472: Befestigungselement zur Befestigung des schallabsorbierenden Elements an dem radial außen liegender Gehäusebereich
- 48: radial nach außen zeigende Strömungsflächen
- 49: radial nach innen zeigende Strömungsflächen
- 31: Turbine
- 32: Abgasleitung
- R: radiale Richtung
- x: axiale Richtung
- T: Abstand zwischen benachbarten Dämpfungselementen
- D: Abstand zwischen Innenschale und Außenschale
- A: konvex gekrümmte Fläche

## Patentansprüche

1. Schalldämpfer (40) für einen Abgasturbolader, umfassend eine Vielzahl von Dämpfungselementen (41), die konzentrisch um eine Zentralachse (42) des Schalldämpfers angeordnet und konzentrisch voneinander beabstandet sind, so dass jeweils zwischen benachbarten Dämpfungselementen ein Strömungskanal (43) ausgebildet ist, wobei die Dämpfungselemente (41) ein nicht-metallisches Material umfassen, und wobei der Strömungskanal (43) eine Einströmöffnung (44) aufweist, die von der Zentralachse (42) einen größeren radialen Abstand aufweist als eine Ausströmöffnung (45) des Strömungskanals (43).

2. Schalldämpfer (40) nach Anspruch 1, wobei die Dämpfungselemente (41) trichterartig um die Zentralachse (42) herum angeordnet sind.

3. Schalldämpfer (40) nach Anspruch 1 oder 2, wobei die Dämpfungselemente (41) aus einem nicht-metallischen Material bestehen.

4. Schalldämpfer (40) nach einem der Ansprüche 1 bis 3, wobei das nicht-metallische Material mindestens ein Material ausgewählt aus der Gruppe bestehend aus: Polymeren, insbesondere anorganischen Polymeren; polymerbasierten Werkstoffen, insbesondere polymerbasierten Verbundwerkstoffen; keramischen Materialien, insbesondere Materialien umfassend keramische Hohlkugeln; Glasfasermaterialen, insbesondere Absorbermaterialen auf Glasfaserbasis; Glasfasermaterialen umfassend SiO₂ Silikatfasern; und Glasschaummaterialien, umfasst.

5. Schalldämpfer (40) nach einem der Ansprüche 1 bis 4, wobei die Dämpfungselementen (41) zwischen einem einströmseitigen Ende (41A) und einem ausströmseitigen Ende (41B) gekrümmt sind, sodass der Strömungskanal (43) ausgebildet ist, um eine Strömungsumlenkung in Richtung der Zentralachse (42) bereitzustellen, insbesondere wobei die Strömungsumlenkung eine Umlenkung der Strömung um einen Umlenkwinkel α von 5 °≤ α ≤ 180 ° umfasst.

6. Schalldämpfer (40) nach einem der Ansprüche 1 bis 5, wobei radial nach außen zeigende Strömungsflächen (48) der Dämpfungselementen (41) eine konkave Krümmung aufweisen, und wobei radial nach innen zeigende Strömungsflächen (49) der Dämpfungselementen (41) eine konvexe Krümmung aufweisen.

7. Schalldämpfer (40) nach einem der Ansprüche 1 bis 4, wobei einströmseitige Enden (41A) der Dämpfungselemente (41) auf einer in axialer Richtung konvex gekrümmtem Fläche, insbesondere auf einer teilweise kugelförmigen oder teilweise elliptischen Fläche, liegen.

8. Schalldämpfer (40) nach einem der Ansprüche 1 bis 5, wobei die Einströmöffnung (44) einen größeren Strömungsquerschnitt aufweist als die Ausströmöffnung (45), insbesondere wobei die Einströmöffnung (44) und/oder die Ausströmöffnung (45) des Strömungskanals (43) ringartig um die Zentralachse (42) ausgebildet sind.

9. Schalldämpfer (40) nach einem der Ansprüche 1 bis 8, ferner umfassend eine Verbindungsstruktur (46) zur Verbindung von mindestens zwei benachbarten Dämpfungselementen (41), insbesondere wobei die Verbindungsstruktur (46) ein nicht-metallisches Material umfasst oder aus einem nicht-metallischen Material besteht, wobei das nicht-metallische Material mindestens ein Material ausgewählt aus der Gruppe bestehend aus: Polymeren, insbesondere anorganischen Polymeren; polymerbasierten Werkstoffen, insbesondere polymerbasierten Verbundwerkstoffen; keramischen Materialien, insbesondere Materialien umfassend keramische Hohlkugeln; Glasfasermaterialen, insbesondere Absorbermaterialen auf Glasfaserbasis; Glasfasermaterialen umfassend SiO₂ Silikatfasern; und Glasschaummaterialien, umfasst.

10. Schalldämpfer (40) nach einem der Ansprüche 1 bis 8, ferner umfassend eine ausströmseitge zylindrische Dämpfungsstruktur (47), insbesondere wobei die Dämpfungsstruktur (47) ein nicht-metallisches Material umfasst oder aus einem nicht-metallischen Material besteht, wobei das nicht-metallische Material mindestens ein Material ausgewählt aus der Gruppe bestehend aus: Polymeren, insbesondere anorganischen Polymeren; polymerbasierten Werkstoffen, insbesondere polymerbasierten Verbundwerkstoffen; keramischen Materialien, insbesondere Materialien umfassend keramische Hohlkugeln; Glasfasermaterialen, insbesondere Absorbermaterialen auf Glasfaserbasis; Glasfasermaterialen umfassend SiO₂ Silikatfasern; und Glasschaummaterialien, umfasst..

11. Schalldämpfer (40) nach Anspruch 10, wobei die zylindrische Dämpfungsstruktur (47) mit einem ausströmseitgen Ende des radial äußersten Dämpfungselements verbunden ist.

12. Schalldämpfer (40) nach einem der Ansprüche 9 oder 10, wobei die zylindrische Dämpfungsstruktur (47) eine Verbindungsstruktur (471), insbesondere Verbindungsflansch, zur Verbindung des Schalldämpfers mit einer Ansaugseite eines Verdichtergehäuses, insbesondere eines Radialverdichters (20), eines Abgasturboladers aufweist.

13. Schalldämpfer (40) nach einem der Ansprüche 1 bis 11, ferner umfassend ein zentrales längliches Dämpfungselement (41Z), insbesondere dornartiges Dämpfungselement, welches sich entlang der Zentralachse (42) erstreckt und in axialer Richtung über ein ausströmseitiges Ende des radial äußersten Dämpfungselements hinausragt, insbesondere wobei das zentrales längliches Dämpfungselement (41Z) ein nicht-metallisches Material umfasst oder aus einem nicht-metallischen Material besteht, wobei das nicht-metallische Material mindestens ein Material ausgewählt aus der Gruppe bestehend aus: Polymeren, insbesondere anorganischen Polymeren; polymerbasierten Werkstoffen, insbesondere polymerbasierten Verbundwerkstoffen; keramischen Materialien, insbesondere Materialien umfassend keramische Hohlkugeln; Glasfasermaterialen, insbesondere Absorbermaterialen auf Glasfaserbasis; Glasfasermaterialen umfassend SiO₂ Silikatfasern; und Glasschaummaterialien, umfasst..

14. Abgasturbolader (30) mit einem Schalldämpfer (40) gemäß einem der Ansprüche 1 bis 12, wobei der Schalldämpfer auf der Ansaugseite eines Verdichters, insbesondere Radialverdichters (20), des Abgasturboladers angeordnet ist, insbesondere wobei der Schalldämpfer (40) mit einem radial innen liegenden Gehäusebereich (10A) eines Verdichtergehäuses (10) verbunden ist, und zumindest teilweise von einem radial außen liegenden Gehäusebereich (10C) des Verdichtergehäuses (10) umschlossen ist, insbesondere wobei einzelne Teile des Verdichtergehäuses, insbesondere ein Diffusorbereich (10B) des Verdichtergehäuses (10)mit schallabsorbierendem Material, insbesondere schallabsorbierendem nichtmetallischem Material ausgekleidet sind.

15. Brennkraftmaschine mit einem Abgasturbolader (30) gemäß Anspruch 14, insbesondere wobei der Abgasturbolader über eine oder mehrere Abgasleitungen (32) und eine oder mehrere Ladeluftaustrittsöffnungen (19) in vertikaler oder horizontaler Ausrichtung an einen Verbrennungsmotor angeschlossen ist.
